(19) Europäisches Patentamt
European Patent Office
Office européen des brevets

(11) **EP 3 454 609 A1**

(12) **EUROPEAN PATENT APPLICATION**
published in accordance with Art. 153(4) EPC

(43) Date of publication:
**13.03.2019 Bulletin 2019/11**

(21) Application number: **16902678.8**

(22) Date of filing: **25.05.2016**

(51) Int Cl.:
***H04W 52/14*** (2009.01)

(86) International application number:
**PCT/CN2016/083306**

(87) International publication number:
**WO 2017/201688 (30.11.2017 Gazette 2017/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Huawei Technologies Co., Ltd.
Longgang District
Shenzhen, Guangdong 518129 (CN)**

(72) Inventors:
• **YE, Guojun
Shenzhen
Guangdong 518129 (CN)**

• **LIN, Jie
Shenzhen
Guangdong 518129 (CN)**
• **WU, Yu
Shenzhen
Guangdong 518129 (CN)**
• **CHEN, Shuai
Shenzhen
Guangdong 518129 (CN)**

(74) Representative: **Thun, Clemens
Mitscherlich PartmbB
Patent- und Rechtsanwälte
Sonnenstraße 33
80331 München (DE)**

(54) **METHOD FOR SETTING CHANNEL TRANSMISSION POWER OF REMOTE RADIO UNIT, AND BASE STATION**

(57)  The present invention relates to the field of wireless technologies, and specifically, to remote radio unit channel transmit power setting. Embodiments of the present invention provide a remote radio unit channel transmit power setting method and a base station. A first base station transmits signals to first UE at a first power by respectively using a first channel and a second channel of an RRU, and transmits signals to the UE at a second power by respectively using a third channel and a fourth channel of the RRU.

A first base station transmits signals to first user equipment at a first power by respectively using a first channel and a second channel of a remote radio unit

201

The first base station transmits signals to the user equipment at a second power by respectively using a third channel and a fourth channel of the remote radio unit

202

FIG. 2

## Description

## TECHNICAL FIELD

The present invention relates to the field of wireless technologies, and specifically, to remote radio unit channel transmit power setting.

## BACKGROUND

With development of wireless technologies, requirements on cell capacities become increasingly high. A multiple-input multiple-output (Multiple-Input Multiple-Output, MIMO) technology means that a plurality of transmit antennas and receive antennas are respectively used at a transmit end and a receive end. With the MIMO technology, space resources can be fully used and multiple-input multiple-output is implemented by using a plurality of antennas, so that a system or cell capacity can be exponentially increased without increasing a frequency spectrum resource or an antenna transmit power. For example, for a Long Term Evolution (Long Term Evolution, LTE) network, a cell having four transmit channels and four receive channels (4T4R) has more capacity gains than a cell having two transmit channels and two receive channels (2T2R). Using more transmit and receive antennas is a trend of LTE evolution.

During network deployment, a distributed base station architecture may be used, that is, an architecture including a baseband unit (Baseband Unit, BBU) and a remote radio unit (Remote Radio Unit, RRU) may be used. The BBU and the RRU are connected by using an optical fiber. One BBU may support one or more RRUs.

An RRU having a multi-frequency band and multi-standard support feature can satisfy a deployment requirement of a multi-frequency band and multi-standard network. The RRU may also be referred to as a multi-mode RRU. For example, Global System for Mobile Communications (Global System for Mobile Communications, GSM) or Universal Mobile Telecommunications System (Universal Mobile Telecommunications System, UMTS) shares a 4T4R RRU with LTE. The 4T4R RRU has four transmit channels and four receive channels. For an LTE cell in a 2T2R mode, two channels of the RRU are used by the LTE cell, and the other channels may be used by a GSM cell or a UMTS cell. When the LTE cell is evolved to a 4T4R mode, the four channels of the RRU need to be used by the LTE cell. In this case, the GSM cell or the UMTS cell shares some channels of the RRU with the LTE cell.

When an LTE cell shares some channels of an RRU with a cell supporting another standard, for the LTE cell, there is a problem of a waste of RRU channel transmit powers due to existence of an unshared channel of the RRU.

## SUMMARY

Embodiments of the present invention provide an RRU channel transmit power setting method and a base station, to resolve a problem of a waste of RRU channel transmit powers caused when an LTE cell and a cell supporting another standard share some channels of an RRU.

According to a first aspect, an embodiment of the present invention provides a remote radio unit channel transmit power setting method. The method includes: transmitting, by an evolved NodeB (eNB), signals to Long Term Evolution (LTE) user equipment (UE) at a first power by respectively using a first channel and a second channel of a remote radio unit (RRU); and transmitting, by the eNB, signals to the LTE UE at a second power by respectively using a third channel and a fourth channel of the RRU, where a sum of the second power and a third power is less than or equal to the first power, and the third power is used by a non-LTE base station to transmit signals to non-LTE UE by using the third channel and the fourth channel of the RRU.

According to a second aspect, an embodiment of the present invention provides a base station. The base station includes a processing unit and a transceiver unit, where the processing unit is configured to transmit, by using the transceiver unit, signals to Long Term Evolution LTE user equipment UE at a first power by respectively using a first channel and a second channel of an RRU; and the processing unit is further configured to transmit signals to the LTE UE at a second power by respectively using a third channel and a fourth channel of the RRU, where a sum of the second power and a third power is less than or equal to the first power, and the third power is used by a non-LTE base station to transmit signals to non-LTE UE by using the third channel and the fourth channel of the RRU.

According to a third aspect, an embodiment of the present invention provides another base station. The base station includes a processor and a transceiver, where the processor is configured to transmit, by using the transceiver, signals to Long Term Evolution LTE user equipment UE at a first power by respectively using a first channel and a second channel of an RRU; and the processor is further configured to transmit signals to the LTE UE at a second power by respectively using a third channel and a fourth channel of the RRU, where a sum of the second power and a third power is less than or equal to the first power, and the third power is used by a non-LTE base station to transmit signals to non-LTE UE by using the third channel and the fourth channel of the RRU.

The signals are transmitted to the LTE UE at the first power by respectively using the first channel and the second channel of the RRU and the signals are transmitted to the LTE UE at the second power by respectively using the third channel and the fourth channel of the RRU, so that a problem of a waste of RRU channel powers in a scenario in which an LTE base station and a non-LTE base station share some channels of the RRU is avoided. In addition, because the signals are transmitted at full power by using the first channel and the second channel, reduction of LTE network coverage performance is also avoided.

## BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a schematic diagram of a possible application scenario according to an embodiment of the present invention;
FIG. 2 is a schematic flowchart of possible RRU channel transmit power setting according to an embodiment of the present invention;
FIG. 3 is a schematic structural diagram of a possible first base station according to an embodiment of the present invention; and
FIG. 4 is a schematic structural diagram of another possible first base station according to an embodiment of the present invention.

## DESCRIPTION OF EMBODIMENTS

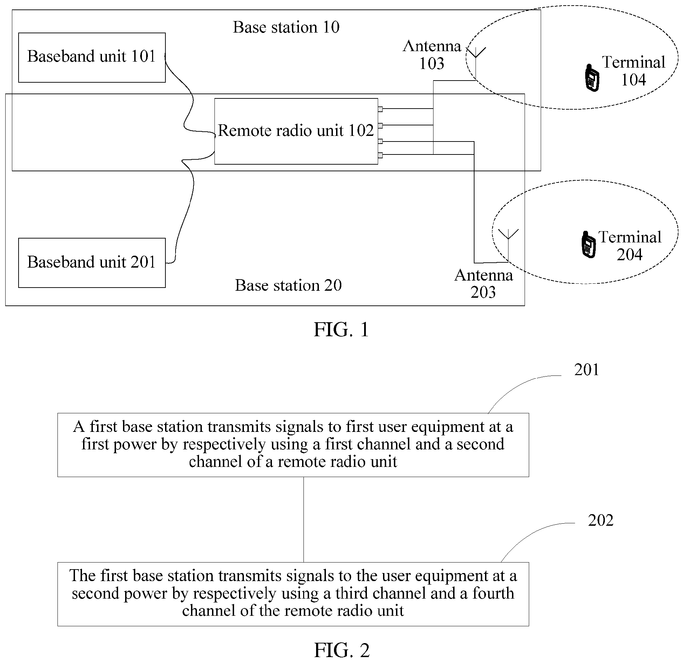

An RRU channel transmit power setting method and an apparatus are described in the embodiments of the present invention, to resolve a problem of a waste of RRU channel transmit powers caused when an LTE cell and a cell supporting another standard share some channels of an RRU.
As shown in FIG. 1, FIG. 1 is a schematic diagram of a possible application scenario according to an embodiment of the present invention. A base station 10 is an LTE evolved NodeB (evolved NodeB, eNB), and a base station 20 is a UMTS or GSM base station. The base station 10 includes a BBU 101, an RRU 102, and an antenna 103, and the base station 20 includes a BBU 201, an RRU 102, and an antenna 203. In this application scenario, the RRU 102 can support both LTE and UMTS or GSM. An LTE terminal 104 communicates with the base station 10, and a terminal 204 communicates with the base station 20. The base station 10 in this application scenario may alternatively be an LTE-Advanced (LTE-Advanced, LTE-A) base station.
The terminal in the embodiments of the present invention may be a wireless terminal. The wireless terminal may be a mobile terminal such as a mobile phone (or referred to as a "cellular" phone) or a computer with a mobile terminal. For example, the wireless terminal may be a portable, pocket-sized, handheld, computer built-in, or in-vehicle mobile apparatus. The wireless terminal exchanges voice and/or data with a radio access network. The terminal may also be referred to as a subscriber unit (Subscriber Unit, SU), a subscriber station (Subscriber Station, SS), a mobile station (Mobile Station, MS), an access terminal (Access Terminal, AT), a user terminal (User Terminal, UT), a user agent, or user equipment (User Equipment, UE).
Application scenarios described in the embodiments of the present invention aim to more clearly describe the technical solutions in the embodiments of the present invention, but are not intended to limit the technical solutions provided in the embodiments of the present invention. A person of ordinary skill in the art may know that as the technology evolves and a new application scenario emerges, the technical solutions provided in the embodiments of the present invention are further applicable to a similar technical problem.
For ease of description, in the embodiments of the present invention, an example in which LTE and UMTS share a multi-mode RRU having four channels is used for description.
For LTE, a resource block (Resource Block, RB) includes 12 subcarriers and seven orthogonal frequency division multiplexing (Orthogonal Frequency Division Multiplexing, OFDM) symbols. The seven OFDM symbols are classified into two types: an OFDM symbol in which there is a reference signal (Reference Signal, RS) and an OFDM symbol in which there is no RS. The OFDM symbol in which there is no RS may also be referred to as an OFDM symbol of a type A, and the OFDM symbol in which there is an RS may also be referred to as an OFDM symbol of a type B. When there are four antennas, there are RSs in symbols 0, 1, and 4, and there is no RS in other four symbols.
EA indicates a resource element (Resource Element, RE) power of a physical downlink shared channel (Physical Downlink Shared Channel, PDSCH) in an OFDM symbol in which there is no RS, EB indicates an RE power of a PDSCH in an OFDM symbol in which there is an RS, and ERS indicates an RE power of an RS. $\rho_A$ indicates a ratio of the RE power of the PDSCH in the OFDM symbol in which there is no RS to the RE power of the RS, and is a linear value. $\rho_B$ indicates a ratio of the RE power of the PDSCH in the OFDM symbol in which there is an RS to the RE power of the RS, and is a linear value. Generally, $P_A=\rho_A$, $P_A$ may indicate an offset between the RE power of the RS and the RE power of the PDSCH in the OFDM symbol in which there is no RS, and $P_B$ indicates a ratio of the RE power of the PDSCH in the OFDM symbol in which there is an RS to the RE power of the PDSCH in the OFDM symbol in which there is no RS. A relationship between $P_B$ and $\rho_B/\rho_A$ is shown in Table 1.

**Table 1 Relationship between $P_B$ and $\rho_B/\rho_A$**

| $P_B$ | $\rho_B/\rho_A$ | |
|---|---|---|
| | **Single antenna port** | **2 or 4 antenna ports** |
| 0 | 1 | 5/4 |
| 1 | 4/5 | 1 |
| 2 | 3/5 | 3/4 |
| 3 | 2/5 | 1/2 |

In the prior art, for four transmit channels (4T), an eNB determines a transmit power of each antenna port based on a group of ERSs and parameters $P_A$ and $P_B$, that is, determines a power of each channel of the multi-mode RRU having four channels.

In a deployment scenario in which LTE and UMTS share the RRU, the four channels of the RRU are used in LTE, and it is assumed that two transmit channels of the RRU are used in UMTS. For example, a third channel and a fourth channel of the RRU are used in UMTS. In LTE, the transmit power of each channel of the RRU is determined based on the group of ERSs and the parameters $P_A$ and $P_B$. When LTE and UMTS share the third channel and the fourth channel of the RRU, some transmit powers of a first channel and a second channel of the RRU cannot be used. Consequently, a problem of a waste of transmit powers exists. Particularly, because LTE evolved from a two-transmit two-receive mode (2T2R) to a four-transmit four-receive mode (4T4R) needs to share some channels of the RRU with UMTS, an LTE transmit power is reduced. Consequently, LTE network coverage performance is reduced.

An embodiment of the present invention provides an RRU channel transmit power setting method. FIG. 2 is a schematic flowchart of possible RRU channel transmit power setting according to an embodiment of the present invention.

201. A first base station transmits signals to first UE at a first power by respectively using a first channel and a second channel of an RRU.

202. The first base station transmits signals to the UE at a second power by respectively using a third channel and a fourth channel of the RRU.

A sum of the second power and a third power is less than or equal to the first power, and the third power is used by a second base station to transmit signals to second UE by using the third channel and the fourth channel of the RRU. The first base station and the second base station are base stations of different standards.

Optionally, if the second base station communicates with the second UE by using a single antenna, the second base station transmits a signal to the second UE only at the third power by using the fourth channel of the RRU. For the first base station, the first base station transmits a signal to the UE at the second power by using the fourth channel of the RRU, and may transmit a signal to the UE at the second power or the first power by using the third channel of the RRU. If the first base station transmits a signal to the UE at the second power by using the third channel of the RRU, although some powers of the third channel of the RRU are not used, a problem of a waste of RRU channel powers is alleviated compared with the prior art.

The first base station may be an LTE eNB. The eNB transmits signals to LTE UE at the first power by respectively using the first channel and the second channel of the RRU, and the eNB transmits signals to the LTE UE at the second power by respectively using the third channel and the fourth channel of the RRU. That is, the eNB transmits signals to the LTE UE by using four antennas by using the RRU having four channels. The third power of the third channel and the fourth channel of the RRU is reserved. The third power is used by a GSM base station or a UMTS base station to transmit signals to GSM UE or UMTS UE by using the third channel and the fourth channel. The sum of the second power and the third power is equal to the first power. Optionally, the sum of the second power and the third power is less than the first power. Optionally, the first base station may be an LTE-A base station.

The signals are transmitted to the LTE UE at the first power by respectively using the first channel and the second channel of the RRU and the signals are transmitted to the LTE UE at the second power by respectively using the third channel and the fourth channel of the RRU, so that a problem of a waste of RRU channel powers in a scenario in which an LTE base station and a non-LTE base station share some channels of the RRU is avoided. In addition, because the signals are transmitted at full power by using the first channel and the second channel, reduction of LTE network coverage performance is also avoided.

A 2T2R LTE base station and a UMTS base station share the RRU having four channels. The LTE base station communicates with LTE UE by using the first channel and the second channel of the RRU, and the UMTS base station communicates with UMTS UE by using the third channel and the fourth channel of the RRU. When LTE is evolved from 2T2R to 4T4R, the LTE base station uses four channels of the RRU. In this way, the LTE base station and the UMTS base station share the third channel and the fourth channel of the RRU.

The RRU channel transmit power setting method is described below in detail.

The eNB obtains the third power used by the UMTS base station. Optionally, the eNB and the UMTS base station exchange information to obtain the third power; or the eNB obtains the third power through network management configuration.

The eNB determines the first power based on an RE power of an RS, $P_A$, and $P_B$.

The eNB determines the second power based on the first power and the third power. A sum of the second power and the third power is less than or equal to the first power.

The eNB transmits signals to the LTE UE at the first power by respectively using the first channel and the second channel of the RRU, and transmits signals to the LTE UE at the second power by respectively using the third channel and the fourth channel of the RRU. The UMTS base station may transmit signals to the UMTS UE at the third power by respectively using the third channel and the fourth channel of the RRU.

Optionally, the eNB determines an attenuation coefficient based on the first power and the third power, and the eNB obtains and uses the second power based on the first power and the attenuation coefficient.

The eNB transmits the signals to the LTE UE at the first power by respectively using the first channel and the second channel of the RRU, that is, when the eNB and the UMTS base station share the RRU, the eNB does not reduce transmit powers of the first channel and the second channel. Therefore, pilot measurement of the LTE UE is not affected, thereby ensuring the LTE network coverage performance.

For a person skilled in the art, the foregoing method is also applicable to an RRU having more channels (for example, an RRU having eight channels).

It may be understood that, to implement the foregoing functions, network elements, such as the UE and the eNB, include corresponding hardware structures and/or software modules for performing the functions. A person skilled in the art should be easily aware that, in combination with examples of units and solution steps described in the embodiments disclosed in this specification, the present invention may be implemented in a computer software form, a hardware form, or a form of a combination of hardware and computer software. Whether the function is performed by using the hardware, by using the computer software, or by driving the hardware by using the computer software depends on particular applications and design constraint conditions of the technical solutions. A person skilled in the art may use different methods to implement the described functions for each particular application, but it should not be considered that the implementation goes beyond the scope of the present invention.

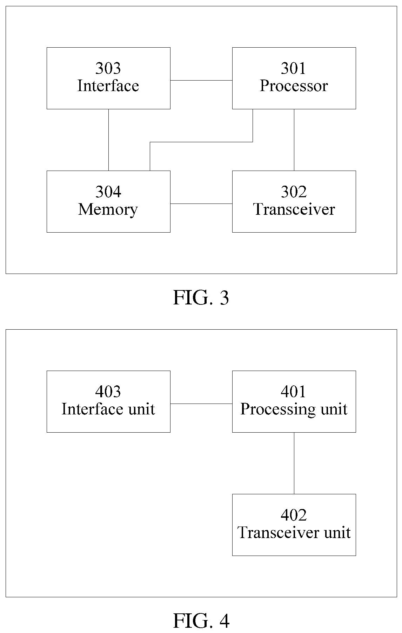

FIG. 3 is a schematic structural diagram of a possible first base station according to an embodiment of the present invention. The first base station implements the RRU channel transmit power setting method in FIG. 2. Therefore, the beneficial effects of the RRU channel transmit power setting method can also be achieved. The first base station may be an eNB or an LTE-A base station. The first base station includes a processor 301 and a transceiver 302.

The processor 301 is configured to transmit, by using the transceiver 302, signals to first UE at a first power by respectively using a first channel and a second channel of an RRU, and the processor 301 is further configured to transmit signals to the UE at a second power by respectively using a third channel and a fourth channel of the RRU. A sum of the second power and a third power is less than or equal to the first power, and the third power is used by a second base station to transmit signals to second UE by using the third channel and the fourth channel of the RRU. The first base station and the second base station are base stations of different standards. Optionally, the second base station is a GSM base station or a UMTS base station.

The first base station may further include an interface 303. The processor 301 obtains the third power by using the interface 303.

Optionally, the processor 301 determines an attenuation coefficient based on the first power and the third power, and obtains the second power based on the first power and the attenuation coefficient.

The first base station may further include a memory 304. The memory 304 is configured to store program code and/or data. The processor 301 invokes the program code stored in the memory 304 to perform the foregoing processing.

It may be understood that FIG. 3 shows only a design of the first base station. In an actual application, the first base station may include any quantity of processors, transceivers, memories, and the like. All base stations that can implement the embodiments of the present invention fall within the protection scope of the present invention.

FIG. 4 is a schematic structural diagram of another possible first base station according to an embodiment of the present invention. The apparatus implements the RRU channel transmit power setting method in FIG. 2. Therefore, the beneficial effects of the RRU channel transmit power setting method can also be achieved. The first base station may be an eNB or an LTE-A base station. The first base station includes a processing unit 401 and a transceiver unit 402.

The processing unit 401 transmits, by using the transceiver unit 402, signals to first UE at a first power by respectively using a first channel and a second channel of an RRU, and the processing unit 401 is further configured to transmit signals to the UE at a second power by respectively using a third channel and a fourth channel of the RRU. A sum of the second power and a third power is less than or equal to the first power, and the third power is used by a second base station to transmit signals to second UE by using the third channel and the fourth channel of the RRU. The first base station and the second base station are base stations of different standards. Optionally, the second base station is a GSM base station or a UMTS base station.

The first base station may further include an interface unit 403. The processing unit 401 obtains the third power by using the interface unit 403.

Optionally, the processing unit 401 determines an attenuation coefficient based on the first power and the third power, and obtains the second power based on the first power and the attenuation coefficient.

The first base station in this embodiment of the present invention implements the steps/operations of the foregoing method, and functions of the components of the first base station may be specifically implemented based on the method in the foregoing method embodiment. For a specific implementation process thereof, refer to related descriptions in the foregoing method embodiment.

A processor configured to perform the RRU channel transmit power setting in the embodiments of the present invention may be a central processing unit (CPU), a general purpose processor, a digital signal processor (DSP), an application-specific integrated circuit (ASIC), a field programmable gate array (FPGA) or another programmable logic device, a transistor logic device, a hardware component, or any combination thereof. The processor may implement or perform various examples of logic blocks and modules that are described with reference to the disclosure of the present invention.

A person skilled in the art should be aware that in one or more of the foregoing examples, the functions described in the present invention may be implemented by using hardware, software, firmware, or any combination thereof. When this application is implemented by using software, these functions may be stored in a computer-readable medium or transmitted as one or more instructions or code in the computer-readable medium. The computer-readable medium includes a computer storage medium and a communications medium. The communications medium includes any medium that enables a computer program or related information to be transmitted from one place to another place. The storage medium may be any available medium accessible to a general or dedicated computer.

The objectives, technical solutions, and benefit effects of the present invention are further described in detail in the foregoing specific embodiments. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

**Claims**

1. A remote radio unit RRU channel transmit power setting method, wherein the method comprises:

    transmitting, by an evolved NodeB eNB, signals to Long Term Evolution LTE user equipment UE

    at a first power by respectively using a first channel and a second channel of an RRU; and transmitting, by the eNB, signals to the LTE UE at a second power by respectively using a third channel and a fourth channel of the RRU, wherein

    a sum of the second power and a third power is less than or equal to the first power, and the third power is used by a non-LTE base station to transmit signals to non-LTE UE by using the third channel and the fourth channel of the RRU.

2. The method according to claim 1, wherein the eNB determines the first power based on a resource element RE power of a reference signal RS, $P_A$, and $P_B$, $P_A$ is an offset between the RE power of the RS and an RE power of a physical downlink shared channel PDSCH in an orthogonal frequency division multiplexing OFDM symbol in which there is no RS, and $P_B$ is a ratio of an RE power of a PDSCH in an OFDM symbol in which there is an RS to the RE power of the PDSCH in the OFDM symbol in which there is no RS.

3. The method according to claim 1 or 2, wherein the eNB obtains the third power.

4. The method according to any one of claims 1 to 3, wherein the non-LTE base station comprises:

    a Global System for Mobile Communications GSM base station, or
    a Universal Mobile Telecommunications System UMTS base station.

5. A base station, comprising a processing unit and a transceiver unit, wherein
    the processing unit is configured to transmit, by using the transceiver unit, signals to Long Term Evolution LTE user equipment UE at a first power by respectively using a first channel and a second channel of an RRU; and
    the processing unit is further configured to transmit signals to the LTE UE at a second power by respectively using a third channel and a fourth channel of the RRU, wherein
    a sum of the second power and a third power is less than or equal to the first power, and the third power is used by a non-LTE base station to transmit signals to non-LTE UE by using the third channel and the fourth channel of the RRU.

6. The base station according to claim 5, wherein the processing unit is configured to determine the first power based on a resource element RE power of a reference signal RS, $P_A$, and $P_B$, $P_A$ is an offset between the RE power of the RS and an RE power of a physical downlink shared channel PDSCH in an orthogonal frequency division multiplexing OFDM symbol in which there is no RS, and $P_B$ is a ratio of an RE power of a PDSCH in an OFDM symbol in which there is an RS to the RE power of the PDSCH in the OFDM symbol in which there is no RS.

7. The base station according to claim 5 or 6, wherein the base station further comprises an interface unit, and the processing unit is configured to obtain the third power by using the interface unit.

8. The base station according to any one of claims 5 to 7, wherein the non-LTE base station comprises:

a Global System for Mobile Communications GSM base station, or
a Universal Mobile Telecommunications System UMTS base station.

9. A base station, comprising a processor and a transceiver, wherein
the processor is configured to transmit, by using the transceiver, signals to Long Term Evolution LTE user equipment UE at a first power by respectively using a first channel and a second channel of an RRU; and
the processor is further configured to transmit signals to the LTE UE at a second power by respectively using a third channel and a fourth channel of the RRU, wherein
a sum of the second power and a third power is less than or equal to the first power, and the third power is used by a non-LTE base station to transmit signals to non-LTE UE by using the third channel and the fourth channel of the RRU.

Base station 10

Baseband unit 101

Antenna
103

Remote radio unit 102

Terminal
104

Baseband unit 201

Base station 20

Antenna
203

Terminal
204

FIG. 1

201

A first base station transmits signals to first user equipment at a
first power by respectively using a first channel and a second
channel of a remote radio unit

202

The first base station transmits signals to the user equipment at a
second power by respectively using a third channel and a fourth
channel of the remote radio unit

FIG. 2

| 303<br>Interface | 301<br>Processor |
| --- | --- |
| 304<br>Memory | 302<br>Transceiver |

FIG. 3

| 403<br>Interface unit | 401<br>Processing unit |
| --- | --- |
| | 402<br>Transceiver unit |

FIG. 4

<table>
<tr><td colspan="2"><b>INTERNATIONAL SEARCH REPORT</b></td><td>International application No.<br><b>PCT/CN2016/083306</b></td></tr>
</table>

**A. CLASSIFICATION OF SUBJECT MATTER**

H04W 52/14 (2009.01) i

According to International Patent Classification (IPC) or to both national classification and IPC

**B. FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNPAT, CNKI, WPI, EPODOC: multiple-input-multiple-output, two-input-two-output, four-input-four-output, multi-antenna, set, assignment, base station, rru, remote radio unit, nodeb, enb, different, multi, multiple, second, first, channel?, antenna?, control????, power

**C. DOCUMENTS CONSIDERED TO BE RELEVANT**

| Category* | Citation of document, with indication, where appropriate, of the relevant passages | Relevant to claim No. |
|---|---|---|
| A | CN 104584654 A (OPTIS CELLULAR TECHNOLOGY LLC), 29 April 2015 (29.04.2015), description, paragraphs [0046]-[0047] and [0052]-[0076] | 1-9 |
| A | CN 104333901 A (CHINA UNITED NETWORK COMMUNICATIONS CORPORATION LIMITED), 04 February 2015 (04.02.2015), the whole document | 1-9 |
| A | CN 102111768 A (ZTE CORP.), 29 June 2011 (29.06.2011), the whole document | 1-9 |
| A | WO 2015118510 A1 (TELEFONAKTIEBOLAGET L M ERICSSONPUBL), 13 August 2015 (13.08.2015), the whole document | 1-9 |

☐ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 January 2017 (17.01.2017) | **26 January 2017 (26.01.2017)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**GAO, Bing**<br><br>Telephone No.: (86-10) **62413848** |

Form PCT/ISA/210 (second sheet) (July 2009)

## INTERNATIONAL SEARCH REPORT
Information on patent family members

International application No.

**PCT/CN2016/083306**

| Patent Documents referred in the Report | Publication Date | Patent Family | Publication Date |
|---|---|---|---|
| CN 104584654 A | 29 April 2015 | IN 1650KON2014 A | 23 October 2015 |
| | | WO 2013115706 A2 | 08 August 2013 |
| | | US 2014056374 A1 | 27 February 2014 |
| | | EP 2810498 A2 | 10 December 2014 |
| | | JP 2015506644 A | 02 March 2015 |
| | | KR 20140127266 A | 03 November 2014 |
| CN 104333901 A | 04 February 2015 | None | |
| CN 102111768 A | 29 June 2011 | None | |
| WO 2015118510 A1 | 13 August 2015 | US 2016262117 A1 | 08 September 2016 |

Form PCT/ISA/210 (patent family annex) (July 2009)